# EUROPEAN PATENT APPLICATION

(11) **EP 2 128 397 A1**
(43) Date of publication of application: **02.12.2009**
(21) Application number: 08703948.3
(22) Date of filing: 21.01.2008
(51) Int. Cl.: F01N 3/20, B01D 53/94, F01N 3/02, F01N 3/08, F01N 3/24, F01N 3/28, F01N 3/36

(54) **EXHAUST EMISSION CONTROL SYSTEM OF INTERNAL COMBUSTION ENGINE**

(30) Priority: 19.01.2007 JP 2007009813; 13.12.2007 JP 2007322119
(71) Applicant: Toyota Jidosha Kabushiki Kaisha, Toyota-shi, Aichi 471-8571 (JP)
(72) Inventor: MORISHIMA, Akinori, Toyota-shi Aichi 471-8571 (JP); INOUE, Mikio, Toyota-shi Aichi 471-8571 (JP)
(74) Representative: Kuhnen & Wacker
(86) International application number: PCT/JP2008/051136
(87) International publication number: WO 2008/088090

(57) **Abstract**

In a treatment for regenerating the purification capability of an exhaust emission control system, a technique for improving exhaust emission more positively is provided by supplying a reducing agent to the exhaust emission control system and allowing part of exhaust to bypass the exhaust emission control system. When an addition synchronous bypass control is carried out in which an reducing agent is added when an NSR is subject to NOx reduction treatment and the volume of exhaust passing through a bypass pipe out of exhaust passing an exhaust pipe is increased to thereby decrease the volume of exhaust passing through the NSR, a judgment is made (S106) as to which is larger a reduction in volume of Nox exhausted (S105) due to an increase in conversion efficiency of the NSR as the result of the addition synchronous bypass control carried out or an increase in volume of Nox exhausted (S103) due to an increase in exhaust passing through the bypass pipe. When a reduction in volume of NOx exhausted due to an increase in conversion efficiency of the NSR is judged to be larger than an increase in volume of Nox exhausted due to an increase in exhaust passing through the bypass pipe, the addition synchronous bypass control is executed (107).

## Description

### TECHNICAL FIELD

The present invention relates to an exhaust purification system for an internal combustion engine.

### BACKGROUND ART

Exhaust gas of an internal combustion engine contains harmful substances such as NOx. It is known that a NOx catalyst for purifying NOx in the exhaust gas may be provided in an exhaust system of the internal combustion engine to reduce discharge of these harmful substances. In this technique, when a storage-reduction type NOx catalyst is provided, for example, the purification performance decreases as the amount of stored NOx increases. Therefore, a reducer is supplied to the storage-reduction type NOx catalyst by executing rich spike control to reduce and release the NOx stored in the catalyst (hereinafter, referred to as a "NOx reduction treatment").

Exhaust gas from an internal combustion engine also contains particulate matter (PM) having carbon as a main component. In a known technique for preventing emission of the particulate matter into the atmosphere, a particulate filter (hereafter, referred to as a "filter") is provided in the exhaust system of the internal combustion engine to trap the particulate matter.

In this filter, as the accumulated amount of trapped particulate matter increases, the filter becomes clogged, causing an increase in back pressure on the exhaust gas and a decrease in the engine performance. Therefore, the temperature of the filter is raised to remove the trapped particulate matter through oxidation (hereafter, referred to as a "PM regeneration treatment"). In this case as well, a fuel as a reducer may be supplied to the filter in order to raise the temperature of the filter.

In a proposed technique, when the NOx reduction treatment for a NOx catalyst and the PM regeneration treatment for a filter (especially a filter carrying a NOx catalyst thereon) are performed, a reducer is supplied, and at the same time, a part of the exhaust gas is caused to bypass an exhaust purification device, such as the NOx catalyst and the filter, to reduce the flow rate of the exhaust gas passing through the exhaust purification device. According to this technique, the reducer can be prevented from being oxidized by a large amount of exhaust gas before reaching the exhaust purification device, and sufficient time can be ensured for the reducer to react in the exhaust purification device. As a result, the efficiency of regenerating the purification performance of the exhaust purification device can be improved.

In relation to this technique of the exhaust purification system, a technique is disclosed in, for example, Japanese Patent Application Publication No. JP-A-2002-349236. That is, a NOx storage-reduction catalyst is provided in an exhaust pipe of an engine, and a liquid injection nozzle capable of injecting a reducer is provided in the exhaust pipe on the exhaust gas upstream side of the NOx storage-reduction catalyst. Moreover, a particulate filter functioning as an oxidation catalyst is provided in the exhaust pipe on the exhaust gas downstream side of the NOx storage-reduction catalyst. Moreover, a bypass pipe is connected to the exhaust pipe so that the exhaust gas bypasses the NOx storage-reduction catalyst. An exhaust gas regulation valve switches so that the exhaust gas flows into either the NOx storage-reduction catalyst or the bypass pipe. Injection of the reducer and the degree of opening of the exhaust gas regulation valve are controlled based on a detection output of a temperature sensor for detecting the temperature of the exhaust gas in the exhaust pipe on the exhaust gas upstream side of the NOx storage-reduction catalyst.

In this technique, when the exhaust gas temperature is lower than a predetermined value, injection of the reducer is turned off, and the exhaust gas regulation valve is regulated so that the exhaust gas flows into the NOx storage-reduction catalyst and does not flow into the bypass pipe. As a result, NOx in the exhaust gas is stored in the catalyst, and HC in the exhaust gas is oxidized by an oxidation function of a noble metal carried by the catalyst. When the exhaust gas temperature is equal to or higher than the predetermined value, the exhaust gas regulation valve is regulated so that a major part of the exhaust gas flows into the bypass pipe and a part of the exhaust gas flows into the catalyst, and at the same time, the reducer is injected from the liquid injection nozzle. As a result, the excess air ratio of the exhaust gas at the catalyst inlet is reduced, and NOx stored in the catalyst reacts with the HC and the like, and are released from the catalyst as N₂, CO₂, and H₂O. Moreover, a part of HC and the like generated by injection of the reducer passes through the catalyst and are trapped by the filter. While the reducer is being injected, a major part of the exhaust gas flows into the bypass pipe and the exhaust gas having a high excess air ratio flows into the filter. Therefore, HC and the like thus trapped by the filter are oxidized and burnt by an oxidation function of an active metal carried by the filter.

According to this technique, the discharge amount of NOx and particulates contained in the exhaust gas can be reduced with high efficiency, and the reducer injected from the liquid injection nozzle into the exhaust pipe can be prevented from being discharged into the atmosphere in a vaporized state.

An engine exhaust purification device disclosed in Japanese Patent Application Publication No. JP-A-2000-265827 includes an exhaust purifying catalyst provided right below an exhaust manifold, a bypass passage for bypassing the exhaust purifying catalyst, a sensor for detecting the temperature of exhaust gas, and an exhaust control valve for limiting entry of the exhaust gas into the exhaust purifying catalyst. When conditions for raising the temperature of the exhaust purifying catalyst are satisfied, a controller reduces the limitation by the exhaust control valve to increase the amount of exhaust gas to be introduced into the exhaust purifying catalyst. As a result, the catalyst temperature is raised without degrading running performance and fuel consumption.

However, when the exhaust gas is caused to bypass the exhaust purification device in treatments of regenerating purification performance, such as a NOx reduction treatment and a PM regeneration treatment, the efficiency of regenerating the purification performance of the exhaust purification device can be increased as described above, and improvement of the rate of purification can be expected. However, a purification substance in the exhaust gas which has bypassed the exhaust purification device may be discharged without passing through the exhaust purification device, which may degrade emission.

It is an object of the present invention to provide a technique of more reliably improving exhaust gas emission by supplying a reducer to an exhaust purification device and causing a part of the exhaust gas to bypass the exhaust purification device in a treatment of regenerating the purification performance of the exhaust purification device.

### DISCLOSURE OF THE INVENTION

In order to achieve the above object, the present invention has been made on the premise that regeneration exhaust flow rate control is executed when a treatment of regenerating purification performance of an exhaust purification device is performed. In the regeneration exhaust flow rate control, a reducer is supplied and, of the exhaust gas passing through an exhaust passage, the amount of exhaust gas passing through a bypass passage is increased, and the amount of exhaust gas passing through the exhaust purification device is reduced. The largest feature of the present invention is that whether the regeneration exhaust flow rate control is executed or not is determined based on the following two values which are obtained when the regeneration exhaust flow rate control is executed: a decrease in an amount of a purification substance discharged from the exhaust purification device due to an increase in a rate of purification by the exhaust purification device; and an increase in an amount of the purification substance discharged from the bypass passage due to an increase in the exhaust gas passing through the bypass passage.

More specifically, an exhaust purification system for an internal combustion engine according to the present invention is characterized by including:
an exhaust purification device provided in an exhaust passage of the internal combustion engine, for purifying exhaust gas passing through the exhaust passage;
a bypass passage branching from the exhaust passage on an upstream side of the exhaust purification device and merging into the exhaust passage on a downstream side of the exhaust purification device, for causing the exhaust gas passing through the exhaust passage to bypass the exhaust purification device;
reducer supply means for supplying a reducer to the exhaust gas passing through the exhaust passage on the upstream side of the exhaust purification device; and
regeneration means for performing a regeneration treatment for regenerating purification performance of the exhaust purification device, when an amount of a purification substance accumulated in the exhaust purification device becomes equal to or larger than a predetermined value, the regeneration treatment being a treatment for regenerating the purification performance of the exhaust purification device by supplying the reducer from the reducer supply means to the exhaust gas to introduce the reducer into the exhaust purification device; and
regeneration exhaust flow rate control means for executing regeneration exhaust flow rate control when the regeneration means performs the regeneration treatment, the regeneration exhaust flow rate control being a control operation in which, of the exhaust gas passing through the exhaust passage, an amount of exhaust gas passing through the bypass passage is increased and an amount of exhaust gas passing through the exhaust purification device is reduced, wherein
whether the regeneration exhaust flow rate control is executed or not is determined based on the following two values which are obtained when the regeneration exhaust flow rate control is executed during execution of the regeneration treatment: a decrease in an amount of the purification substance discharged from the exhaust purification device due to an increase in a rate of purification by the exhaust purification device; and an increase in an amount of the purification substance discharged from the bypass passage due to an increase in the exhaust gas passing through the bypass passage.

According to this structure, it is possible to determine whether the regeneration exhaust flow rate control is executed or not in view of both of the following two values which are obtained when the regeneration exhaust flow rate control is executed: the decrease in the amount of the purification substance discharged from the exhaust purification device due to the increase in the rate of purification by the exhaust purification device; and the increase in the amount of the purification substance discharged from the bypass passage due to the increase in the exhaust gas passing through the bypass passage. More specifically, the regeneration exhaust flow rate control can be executed only when it is determined that the amount of the purification substance discharged to the downstream side of the merging portion of the exhaust passage and the bypass passage becomes smaller than that in the case where the regeneration exhaust flow rate control is not executed. Accordingly, exhaust emission can be more reliably improved by the regeneration exhaust flow rate control.

Note that the term "purification substance" in the above description collectively refers to substances which are contained in the exhaust gas from an internal combustion engine, such as NOx and particulate matter, and which should be purified by the exhaust purification device. Moreover, the expression "regenerates the purification performance of the exhaust purification device when the amount of the purification substance becomes equal to or larger than the predetermined value means that a NOx reduction treatment, a PM regeneration treatment, and the like are performed when NOx storage performance of a storage-reduction type NOx catalyst has significantly degraded as a result of an excessive amount of NOx stored in the storage-reduction type NOx catalyst, or when increase in the back pressure by the filter becomes significant as a result of an excessive amount of particulate matter accumulated on the filter.

The present invention has been made on the premise that the regeneration exhaust flow rate control is executed when the treatment of regenerating the purification performance of the exhaust purification device is performed. In the regeneration exhaust flow rate control, the reducer is supplied and, of the exhaust gas passing through the exhaust passage, the amount of exhaust gas passing through the bypass passage is increased, and the amount of exhaust gas passing through the exhaust purification device is reduced.

The exhaust purification system of the present invention is **characterized in that** the magnitude relation is determined between the following two values which are obtained when the regeneration exhaust flow rate control is executed: the decrease in the amount of the purification substance discharged from the exhaust purification device due to the increase in the rate of purification by the exhaust purification device; and the increase in the amount of the purification substance discharged from the bypass passage due to the increase in the exhaust gas passing through the bypass passage. The regeneration exhaust flow rate control is executed when it is determined that the decrease in the amount of the purification substance discharged from the exhaust purification device due to the increase in the rate of purification by the exhaust purification device is larger than the increase in the amount of the purification substance discharged from the bypass passage due to the increase in the exhaust gas passing through the bypass passage.

More specifically, the exhaust purification system for an internal combustion engine according to the present invention is characterized by further including
purification substance amount determination means for determining the magnitude relation between the following two values which are obtained when the regeneration exhaust flow rate control is executed during execution of the regeneration treatment: the decrease in the amount of the purification substance discharged from the exhaust purification device due to the increase in the rate of purification by the exhaust purification device; and the increase in the amount of the purification substance discharged from the bypass passage due to the increase in the exhaust gas passing through the bypass passage, wherein
the regeneration exhaust flow rate control is executed when the purification substance amount determination means determines that the decrease in the amount of the purification substance discharged from the exhaust purification device due to the increase in the rate of purification by the exhaust purification device is larger than the increase in the amount of the purification substance discharged from the bypass passage due to the increase in the exhaust gas passing through the bypass passage.

In other words, an exhaust purification system for an internal combustion engine according to the present invention is characterized by including:
an exhaust purification device provided in an exhaust passage of the internal combustion engine, for purifying exhaust gas passing through the exhaust passage;
a bypass passage branching from the exhaust passage on an upstream side of the exhaust purification device and merging into the exhaust passage on a downstream side of the exhaust purification device, for causing the exhaust gas passing through the exhaust passage to bypass the exhaust purification device;
reducer supply means for supplying a reducer to the exhaust gas passing through the exhaust passage on the upstream side of a bifurcating portion of the exhaust passage to the bypass passage;
regeneration means for performing a regeneration treatment for regenerating purification performance of the exhaust purification device, when an amount of a purification substance accumulated in the exhaust purification device becomes equal to or larger than a predetermined value, the regeneration treatment being a treatment for regenerating the purification performance of the exhaust purification device by supplying the reducer from the reducer supply means to the exhaust gas to introduce the reducer into the exhaust purification device;
regeneration exhaust flow rate control means for executing regeneration exhaust flow rate control when the regeneration means performs the regeneration treatment, the regeneration exhaust flow rate control being a control operation in which, of the exhaust gas passing through the exhaust passage, an amount of exhaust gas passing through the bypass passage is increased and an amount of exhaust gas passing through the exhaust purification device is reduced; and
purification substance amount determination means for determining the magnitude relation between the following two values which are obtained when the regeneration exhaust flow rate control is executed during execution of the regeneration treatment: a decrease in an amount of the purification substance discharged from the exhaust purification device due to an increase in a rate of purification by the exhaust purification device with and an increase in an amount of the purification substance discharged from the bypass passage due to an increase in the exhaust gas passing through the bypass passage, wherein
the regeneration exhaust flow rate control is executed when the purification substance amount determination means determines that the decrease in the amount of the purification substance discharged from the exhaust purification device due to the increase in the rate of purification by the exhaust purification device is larger than the increase in the amount of the purification substance discharged from the bypass passage due to the increase in the exhaust gas passing through the bypass passage.

According to this structure, in the case where the regeneration exhaust flow rate control is executed, it is possible to execute the regeneration exhaust flow rate control only when the total amount of the purification substance discharged to the downstream side of the merging portion of the exhaust passage and the bypass passage (the difference between the decrease in the amount of the purification substance discharged from the exhaust purification device due to the increase in the rate of purification by the exhaust purification device and the increase in the amount of the purification substance discharged from the bypass passage due to the increase in the exhaust gas passing through the bypass passage) becomes smaller, compared to the case where the regeneration exhaust flow rate control is not executed. Accordingly, exhaust emission can be more reliably improved by the regeneration exhaust flow rate control.

According to the present invention, the purification substance amount determining means may determine the magnitude relation between the following two values which are obtained in a period from start of supplying the reducer in the regeneration treatment to start of supplying the reducer in a next regeneration treatment: the decrease in the amount of the discharged purification substance due to the increase in the rate of purification by the exhaust purification device; and the increase in the amount of the discharged purification substance due to the increase in the exhaust gas passing through the bypass passage.

In the case where the regeneration exhaust flow rate control is executed in the regeneration treatment, the regeneration exhaust flow rate control is executed in a period in which the reducer is supplied from the reducer supply means. In this case, the increase in the discharged purification substance due to the increase in the exhaust gas passing through the bypass passage occurs in a period in which the regeneration exhaust flow rate control is executed. On the other hand, the purification performance of the exhaust purification device is regenerated in the period in which the regeneration exhaust flow rate control is executed. Therefore, the amount of the discharged purification substance is reduced thereafter due to improvement in the rate of purification in a period until the purification substance is accumulated in the exhaust purification device. A similar change is repeated from the supply of the reducer in the next regeneration treatment as a starting point.

Accordingly, it is appropriate that whether the regeneration exhaust flow rate control is executed or not in each regeneration treatment is determined based on the magnitude relation between the following two values in a period from the start of supplying the reducer in the regeneration treatment to the start of supplying the reducer in the next regeneration treatment: the decrease in the amount of the discharged purification substance due to the increase in the rate of purification by the exhaust purification device; and the increase in the amount of the discharged purification substance due to the increase in the exhaust gas passing through the bypass passage.

Therefore, in the present invention, the magnitude relation is determined between the following two values in the period from the start of supplying the reducer in the regeneration treatment to the start of supplying the reducer in the next regeneration treatment: the decrease in the amount of the discharged purification substance due to the increase in the rate of purification by the exhaust purification device; and the increase in the amount of the discharged purification substance due to the increase in the exhaust gas passing through the bypass passage.

According to this structure, it is possible to determine whether the regeneration exhaust flow rate control is executed or not based on the total amount of the purification substance discharged in the whole period of each regeneration treatment. Therefore, exhaust emission can be more reliably improved by the regeneration exhaust flow rate control.

In the present invention, the exhaust purification device may be a storage-reduction type NOx catalyst,
the exhaust purification system may further include an oxidation catalyst that has an oxidation ability and is provided in the exhaust passage on a downstream side of a merging portion of the exhaust passage and the bypass passage, and
whether the regeneration exhaust flow rate control is executed or not may be determined based on the following three values which are obtained when the regeneration exhaust flow rate control is executed during execution of the regeneration treatment: a decrease in an amount of NOx discharged from the exhaust purification device due to an increase in the rate of purification by the exhaust purification device; an increase in an amount of NOx discharged from the bypass passage due to an increase in the exhaust gas passing through the bypass passage; and an increase in an amount of NOx through oxidation of NH₃ discharged from the exhaust purification device by the oxidation catalyst.

Here, a case in which the exhaust purification device of the internal combustion engine is a storage-reduction type NOx catalyst is considered. In this case, in the regeneration treatment, NOx stored (including absorption and adsorption) in the storage-reduction type NOx catalyst, and NOx which is newly discharged from the internal combustion engine during the regeneration treatment are reduced for the most part, but are partially converted into NH₃ and discharged from the storage-reduction type NOx. A part of the NH₃ may be oxidized back to NOx in the oxidation catalyst located downstream. In this case, NOx thus generated may reduce the overall rate of purification of NOx in an exhaust system of the internal combustion engine.

In view of this, in the present invention, it is possible to determine whether the regeneration exhaust flow rate control is executed or not in view of all of the following values which are obtained when the regeneration exhaust flow rate control is executed: the decrease in the amount of NOx discharged from the exhaust purification device due to the increase in the rate of purification by the exhaust purification device; the increase in the amount of NOx discharged from the bypass passage due to the increase in the exhaust gas passing through the bypass passage; and the increase in the amount of NOx through oxidation of NH₃ discharged from the exhaust purification device by the oxidation catalyst. More specifically, the regeneration exhaust flow rate control can be executed only when it is determined that the amount of NOx discharged to the downstream side of the oxidation catalyst is reduced compared to the case where the regeneration exhaust flow rate control is not executed. Accordingly, exhaust emission can be more reliably improved by the regeneration exhaust flow rate control.

Moreover, in the present invention, the exhaust purification system may further include NOx amount determining means for determining the magnitude relation between the following two values which are obtained when the regeneration exhaust flow rate control is executed during execution of the regeneration treatment: the decrease in the amount of NOx discharged from the exhaust purification device due to the increase in the rate of purification by the exhaust purification device; and a sum of the increase in the amount of NOx discharged from the bypass passage due to the increase in the exhaust gas passing through the bypass passage and the increase in the amount of NOx through oxidation of NH₃ discharged from the exhaust purification device by the oxidation catalyst, and
the regeneration exhaust flow rate control may be executed when the NOx amount determining means determines that the decrease in the amount of NOx discharged from the exhaust purification device due to the increase in the rate of purification by the exhaust purification device is larger than the sum of the increase in the amount of NOx discharged from the bypass passage due to the increase in the exhaust gas passing through the bypass passage and the increase in the amount of NOx through oxidation of NH₃ discharged from the exhaust purification device by the oxidation catalyst.

According to this structure, in the case where the regeneration exhaust flow rate control is executed, it is possible to execute the regeneration exhaust flow rate control only when the total amount of NOx discharged to the downstream side of the oxidation catalyst (the total of the decrease in the amount of NOx discharged from the exhaust purification device due to the increase in the rate of purification by the exhaust purification device and the sum of the increase in the amount of NOx discharged from the bypass passage due to the increase in the exhaust gas passing through the bypass passage and the increase in the amount of NOx through oxidation of NH₃ discharged from the exhaust purification device by the oxidation catalyst) becomes smaller, compared to the case where the regeneration exhaust flow rate control is not executed. Accordingly, exhaust emission can be more reliably improved by the regeneration exhaust flow rate control.

Moreover, in the present invention, the NOx amount determination means may determine the magnitude relation between the following two values which are obtained in a period from start of supplying the reducer in the regeneration treatment (in this case, a NOx reduction treatment) to start of supplying the reducer in a next regeneration treatment: the decrease in the amount of NOx discharged from the exhaust purification device due to the increase in the rate of purification by the exhaust purification device; and the sum of the increase in the amount of NOx discharged from the bypass passage due to the increase in the exhaust gas passing through the bypass passage and the increase in the amount of NOx through oxidation of NH₃ discharged from the exhaust purification device by the oxidation catalyst.

As described above, it is herein appropriate that whether the regeneration exhaust flow rate control is executed or not in each regeneration treatment is determined based on the magnitude relation between the following two values in a period from the start of supplying the reducer in the regeneration treatment to the start of supplying the reducer in the next regeneration treatment: the decrease in the amount of discharged NOx due to the increase in the rate of purification by the exhaust purification device; and the sum of the increase in the amount of NOx discharged from the bypass passage due to the increase in the exhaust gas passing through the bypass passage and the increase in the amount of NOx through oxidation of NH₃ discharged from the exhaust purification device by the oxidation catalyst.

Therefore, in the present invention, the magnitude relationship is determined between the following two values in the period from the start of supplying the reducer in the regeneration treatment to the start of supplying the reducer in the next regeneration treatment: the decrease in the amount of NOx discharged from the exhaust purification device due to the increase in the rate of purification by the exhaust purification device and the sum of the increase in the amount of NOx discharged from the bypass passage due to the increase in the exhaust gas passing through the bypass passage and the increase in the amount of NOx through oxidation of NH₃ discharged from the exhaust purification device by the oxidation catalyst.

According to this structure as well, it is possible to determine whether the regeneration exhaust flow rate control is executed or not based on the total amount of NOx discharged in the whole period of each regeneration treatment. Therefore, exhaust emission can be more reliably improved by the regeneration exhaust flow rate control.

Note that means for solving the problems in the present invention may be used in combination as far as possible.

### BRIEF DESCRIPTION OF THE DRAWINGS

FIG. 1 is a diagram showing a schematic structure of an internal combustion engine according to a first embodiment of the present invention, and an exhaust system and a control system thereof.
FIG. 2 is an example of a timing chart showing the timing of adding fuel and the timing of opening and closing a switch valve according to an embodiment of the present invention.
FIG. 3 is a flowchart showing an addition-synchronous bypass control execution determination routine according to the first embodiment of the present invention.
FIG. 4 is a diagram showing a schematic structure of an internal combustion engine according to a second embodiment of the present invention, and an exhaust system and a control system thereof.
FIG. 5 is a flowchart showing an addition-synchronous bypass control execution determination routine 2 according to the second embodiment of the present invention.

### BEST MODES FOR CARRYING OUT THE INVENTION

Hereinafter, best modes for carrying out the present invention will be described in detail by using examples, with reference to the accompanying drawings.

### First Embodiment

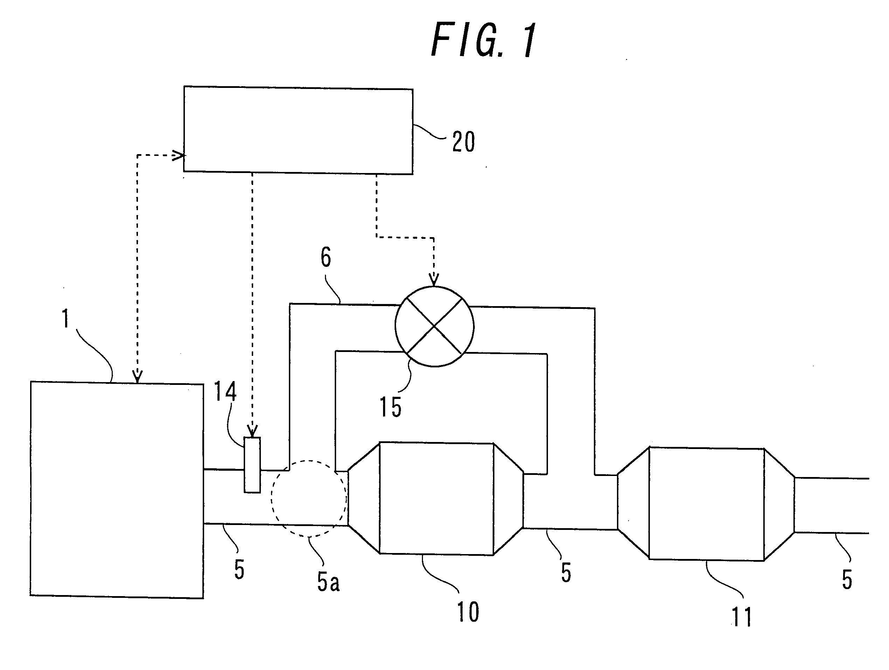

FIG. 1 is a diagram showing a schematic structure of an internal combustion engine according to the present embodiment, and an exhaust system and a control system thereof. An internal combustion engine I shown in FIG. 1 is a diesel engine. Note that the interior of the internal combustion engine I and an intake system thereof are omitted in FIG. l.

In FIG. 1, an exhaust pipe 5 is connected to the internal combustion engine 1 as an exhaust passage through which exhaust gas flows after being discharged from the internal combustion engine 1. The exhaust pipe 5 is connected downstream to a muffler (not shown). A storage-reduction type NOx catalyst (hereinafter, abbreviated as "NSR") 10 for purifying NOx contained in the exhaust gas is provided in the exhaust pipe 5. A filter 11 for trapping particulate matter contained in the exhaust gas is provided on the downstream side of the NSR 10 in the exhaust pipe 5. Note that an oxidation catalyst CCo having an oxidation ability may be added to the NSR 10.

A bypass pipe 6 serving as a bypass passage branches off from the exhaust pipe 5 in a bifurcating portion 5a upstream of the NSR 10. A switch valve 15 for switching to allow or block the flow of the exhaust gas from the internal combustion engine 1 into the bypass pipe 6 is provided in the bypass pipe 6. The bypass pipe 6 merges into the exhaust pipe 5 at a position between the NSR 10 and the filter 11.

By operating the switch valve 15 to cause the exhaust gas from the internal combustion engine 1 to pass directly through the exhaust pipe 5, the exhaust gas is enabled to pass through both the NSR 10 and the filter 11. Similarly, by allowing the exhaust gas from the internal combustion engine 1 to pass through the bypass pipe 6, the exhaust gas is enabled to bypass the NSR 10 and to pass only through the filter 11.

Note that a fuel addition valve 14 for adding fuel serving as a reducer to the exhaust gas during a NOx reduction treatment or a SOx poisoning regeneration treatment of the NSR 10, and during a PM regeneration treatment of the filter 11 is provided on the upstream side of the NSR 10 in the exhaust pipe 5. The NSR 10 described above functions as an exhaust purification device in the present embodiment. The fuel addition valve 14 functions as reducer supply means.

An electronic control unit (ECU) 20 for controlling the internal combustion engine 1 and the exhaust system thereof is also provided for the internal combustion engine 1 and the exhaust system which are structured as described above. The ECU 20 is a unit for not only controlling the operational state of the internal combustion engine 1 and the like according to the operating conditions of the internal combustion engine 1 and requests from a driver, but also performing control relating to an exhaust purification system including the NSR 10 and the filter 11 for the internal combustion engine 1.

Sensors relating to control of the operational state of the internal combustion engine 1, such as an airflow meter, a crank position sensor, and an accelerator position sensor, which are not shown in the drawing, are connected to the ECU 20 via electric wirings, and output signals from these sensors are applied to the ECU 20. Meanwhile, a fuel injection valve (not shown) and the like in the internal combustion engine 1 are connected to the ECU 20 via electric wiring, while the switch valve 15, the fuel addition valve 14, and the like of the present embodiment are connected to the ECU 20 via electric wiring so that these valves and the like are controlled by the ECU 20.

The ECU 20 includes a CPU, a ROM, a RAM, and the like. Programs for executing various controls relating to the internal combustion engine 1 and maps storing data are stored in the ROM. An addition-synchronous bypass control execution determination routine according to the present embodiment, which will be described below, is one of the programs stored in the ROM in the ECU 20.

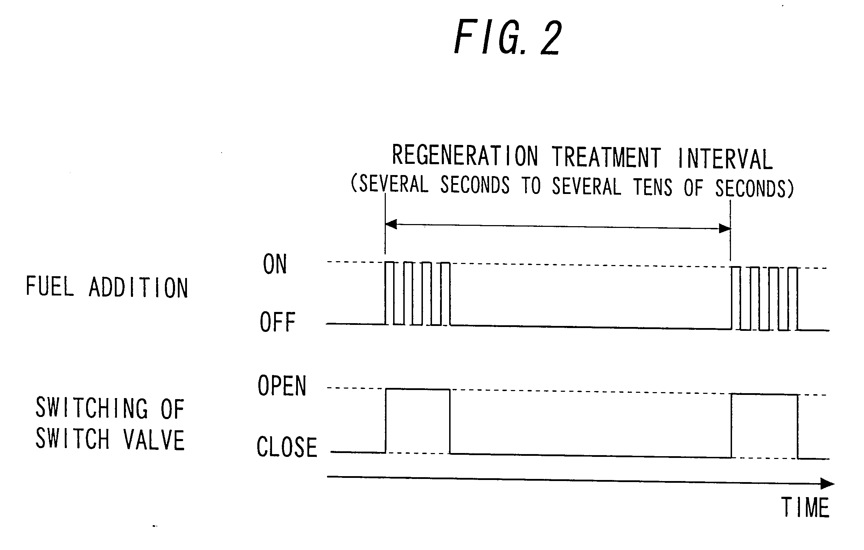

Hereinafter, a case in which a NOx reduction treatment of the NSR 10 is performed in the above structure will be considered. In this case, fuel serving as a reducer is added from the fuel addition valve 14. The switch valve 15 is opened during a period in which the fuel is added, so that a part of the exhaust gas passes through the bypass pipe 6. This reduces the amount of exhaust gas flowing into the NSR 10 (reduces the space velocity (SV)), whereby the fuel added from the fuel addition valve 15 can be prevented from being consumed for oxidation before reaching the NSR 10. Moreover, this can assure enough time for the fuel which has reached the NSR 10 to complete a reduction reaction in the NSR 10, whereby the NOx reduction efficiency can be improved (hereinafter, this control will be referred to as "addition-synchronous bypass control"). FIG. 2 is a timing chart relating to fuel addition from the fuel addition valve 14 and switching of the switch valve 15 in the NOx reduction treatment. Note that the addition-synchronous bypass control functions as regeneration exhaust flow rate control, and the ECU 20 for executing the addition-synchronous bypass control and the switch valve 15 function as regeneration exhaust flow rate control means. The ECU 20 also functions as regeneration means in the present embodiment.

When the addition-synchronous bypass control is executed, however, the exhaust gas flows through the bypass pipe 6 to the downstream side without flowing through the NSR 10 during a period in which the switch valve 15 is open. Therefore, the amount of NOx which is discharged without being purified increases. Depending on the conditions such as an interval of the NOx reduction treatment, an increase in the amount of discharged NOx from the bypass pipe 6 becomes larger than a decrease in the amount of discharged NOx due to improvement in the rate of purification by the NSR 10, whereby the total emission may degrade.

In other words, for example, although the valve open time of the switch valve 15 by the addition-synchronous bypass control is fixed, the interval of the NOx reduction treatment may significantly vary depending on the amount of NOx stored in the NSR 10 and the amount of NOx discharged from the internal combustion engine 1. In this case, the magnitude relation between a decrease in the amount of discharged NOx due to improvement in the rate of purification by the NSR 10 and an increase in the amount of discharged NOx from the bypass pipe 6 may change.

The above amounts of discharged NOx may be compared in advance by adjustment in a steady state. In this method, however, it is sometimes difficult to adapt to a change in interval in an actual transient state.

In view of the above, in the present embodiment, a decrease in the amount of discharged NOx due to improvement in the rate of purification by the NSR 10 and an increase in the amount of discharged NOx from the bypass pipe 6 are compared with each other regarding an interval of the NOx reduction treatment. The addition-synchronous bypass control is executed only when it is determined that the decrease in the amount of discharged NOx due to improvement in the rate of purification by the NSR 10 is larger than the increase in the amount of discharged NOx from the bypass pipe 6.

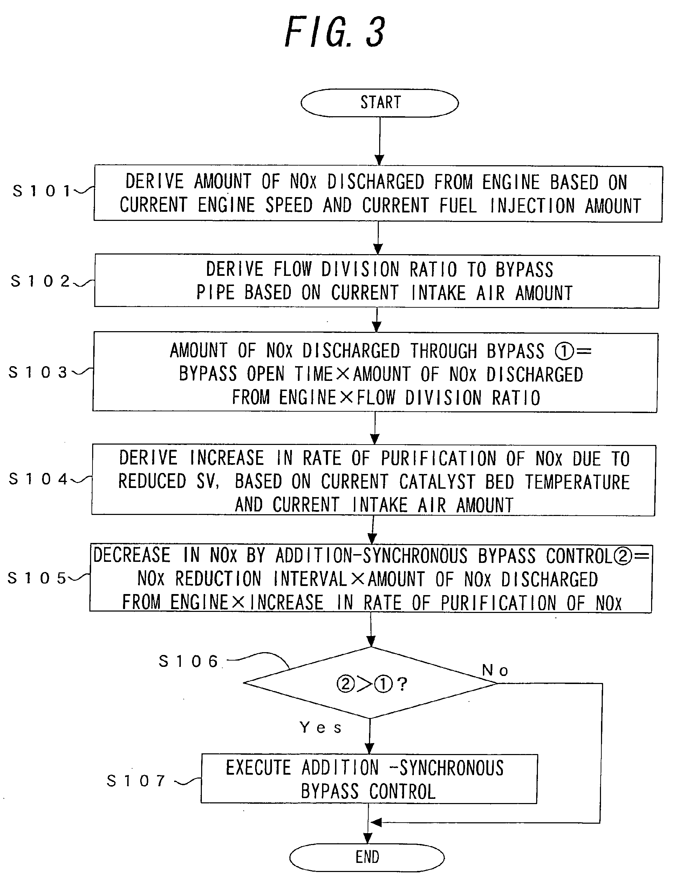

FIG. 3 shows a flowchart of the addition-synchronous bypass control execution determination routine of the present embodiment. This routine is a program stored in the ROM in the ECU 20, and is a routine which is executed every predetermined period by the ECU 20 during execution of the NOx reduction treatment.

When this routine is executed, in S101, the amount of NOx (g/s) discharged from the internal combustion engine 1 per unit time is derived from a current engine speed and a current fuel injection amount. More specifically, the amount of NOx (g/s) discharged from the internal combustion engine I per unit time is derived by reading the amount of NOx discharged per unit time, which corresponds to the current engine speed and the current fuel injection amount, from a map storing the relation between the engine speed and the fuel injection amount and the amount of NOx discharged from the internal combustion engine 1 per unit time. The routine proceeds to S 102 after the process of S 101 is completed.

In S 102, the flow division ratio of the exhaust gas into the bypass pipe 6, which is controlled by the switch valve 15, is derived based on a current intake air amount. More specifically, the flow division ratio of the exhaust gas into the bypass pipe 6 is derived by reading the value of the flow division ratio corresponding to the current intake air amount from a map storing the relation between the intake air amount and a control target value of the flow division ratio in the addition-synchronous bypass control. The routine proceeds to S 103 after the process of S 102 is completed.

In S 103, an increase in the amount of NOx discharged through the bypass pipe 6 while the switch valve 15 is open is calculated. More specifically, the increase in the amount of NOx is calculated by multiplying the amount of NOx (g/s) discharged from the internal combustion engine 1 per unit time which has been derived in S 101, by the valve open time (s) of the switch valve 15, and the flow division ratio derived in S102. The routine proceeds to S104 after the process of S103 is completed.

In S104, an increase in the rate of purification of NOx by the addition-synchronous bypass control (decreased SV) is derived from a current bed temperature of the NSR 10 and the current intake air amount. More specifically, the increase in the rate of purification of NOx is derived by reading the value of the increase in the rate of purification of NOx, which corresponds to the current bed temperature of the NSR 10 and the current intake air amount, from a map storing the relation between the bed temperature of the NSR 10 and the intake air amount and the increase in the rate of purification of NOx. The routine proceeds to S 105 after the process of S 104 is completed.

In S105, a decrease in the amount of NOx discharged from the NSR 10 by the addition-synchronous bypass control is calculated. More specifically, the decrease in NOx discharged from the NSR 10 is calculated by multiplying a NOx reduction interval (s), by the amount of NOx (g/s) discharged from the internal combustion engine 1 per unit time and the increase in the rate of purification of NOx due to the decreased SV. The routine proceeds to S 106 after the process of S105 is completed.

In S106, the amount of NOx discharged through the bypass pipe 6 while the switch valve 15 is open, which has been calculated in S 103, is compared with the decrease in the amount of NOx discharged from the NSR 10 by the addition-synchronous bypass control, which has been calculated in S105. If it is determined that the decrease in the amount of discharged NOx by the addition-synchronous bypass control is larger than the amount of NOx discharged through the bypass pipe 6 while the switch valve 15 is open, the routine proceeds to S107. On the other hand, the routine is terminated once if it is determined that the amount of NOx discharged through the bypass pipe 6 while the switch valve 15 is open is equal to or larger than the decrease in the amount of discharged NOx by the addition-synchronous bypass control.

In S107, the addition-synchronous bypass control is executed. The routine is terminated once after the process of S107 is completed.

As described above, in this routine, the amount of NOx discharged through the bypass pipe 6 while the switch valve 15 is open (which can also be referred to as the "increase in the amount of discharged NOx") is compared with the decrease in the amount of NOx discharged from the NSR 10 by the addition-synchronous bypass control, which has been calculated in S105. The addition-synchronous bypass control is executed only when the decrease in the amount of NOx discharged from the NSR 10 by the addition-synchronous bypass control is larger. Accordingly, the addition-synchronous bypass control can be executed only when it is determined that the total emission is improved by performing the addition-synchronous bypass control. The effect of improving emission can therefore be reliably obtained.

Note that, in the above description, the ECU 20 for performing the processes of S 101 through S106 functions as purification substance amount determining means in the present embodiment.

The above embodiment was described with respect to the case where the exhaust purification device is the NSR 10. However, the exhaust purification device may be a DPNR in which a storage-reduction type NOx catalyst is carried by a filter, or a selective-reduction type NOx catalyst. In the case where the exhaust purification device is the DPNR, the present invention may be applied to PM regeneration of the DPNR. The present invention may also be applicable to an exhaust purification system using a liquid other than fuel, for example, a urea solution, as a reducer. A method for supplying fuel to the exhaust purification device is not limited to addition of the fuel from the fuel addition valve 14, but may be implemented by, for example, auxiliary injection in the internal combustion engine 1.

Moreover, in the above embodiment, the addition-synchronous bypass control is executed by switching the switch valve 15 between an open state and a closed state. However, the degree of opening of the switch valve 15 may be continuously varied to appropriately adjust the amount of exhaust gas passing through the bypass pipe 6 and the amount of exhaust gas passing through the NSR 10, of the exhaust gas passing through the exhaust pipe 5. Instead of using the switch valve 15, the addition-synchronous bypass control may be executed by using a three-way valve provided in the bifurcating portion 5a.

In the addition-synchronous bypass control execution determination routine described above, the amount of NOx discharged through the bypass pipe 6 while the switch valve 15 is open and the decrease in the amount of discharged NOx due to improvement in the rate of purification by the NSR 10 are compared with each other for the regeneration treatment (NOx reduction) interval. However, the period for comparison is not limited to the NOx reduction interval. For example, after the addition-synchronous bypass control is completed, the rate of purification by the NSR 10 gradually decreases as NOx is stored in the NSR 10. Therefore, comparison may be performed for a period in which significant decrease in the amount of discharged NOx due to improvement in the rate of purification by the NSR 10 is actually expected. Moreover, regarding a plurality of NOx reduction intervals, a mean value of the amounts of NOx discharged through the bypass pipe 6 while the switch valve 15 is open may be compared with a mean value of the decreases in the amount of discharged NOx due to improvement in the rate of purification by the NSR 10.

InS101toS105 of the addition-synchronous bypass control execution determination routine described above, the method for calculating the amount of NOx discharged through the bypass pipe 6 while the switch valve 15 is open and the decrease in the amount of NOx discharged from the NSR 10 by the addition-synchronous bypass control is not specifically limited to the method described in the present embodiment. The above calculation method may be modified as appropriate if there is any method capable of calculating these values more accurately.

In the above embodiment, in S 106 of the addition-synchronous bypass control execution determination routine, the amount of NOx discharged through the bypass pipe 6 while the switch valve 15 is open, which has been calculated in S 103, is compared with the decrease in the amount of NOx discharged from the NSR 10 by the addition-synchronous bypass control, which has been calculated in S105. The addition-synchronous bypass control is executed only when it is determined that the decrease in the amount of NOx discharged from the NSR 10 by the addition-synchronous bypass control is larger than the amount of NOx discharged through the bypass pipe 6 while the switch valve 15 is open.

However, the method for determining whether the addition-synchronous bypass control is executed or not based on the amount of NOx discharged through the bypass pipe 6 while the switch valve 15 is open and the decrease in the amount of NOx discharged from the NSR 10 by the addition-synchronous bypass control is not limited to this. For example, in the case where there is a difference in calculation accuracy between the amount of NOx discharged through the bypass pipe 6 while the switch valve 15 is open, which has been calculated in S 103, and the decrease in the amount of NOx discharged from the NSR 10 by the addition-synchronous bypass control, which has been calculated in S105, the above method for determining whether the addition-synchronous bypass control is executed or not may be modified as appropriate by, for example, multiplying one of the above two values by a weighting coefficient.

In other words, the addition-synchronous bypass control may be executed when it is determined that the total emission is substantially improved in view of the following two factors: the amount of NOx discharged through the bypass pipe 6 while the switch valve 15 is open; and the decrease in the amount of NOx discharged from the NSR 10 by the addition-synchronous bypass control.

### Second Embodiment

Hereinafter, a second embodiment of the present invention will be described. The second embodiment will be described with respect to an example in which the NSR and an oxidation catalyst are provided in the exhaust system of the internal combustion engine. In this example, in addition to a decrease in the amount of discharged NOx due to improvement in the rate of purification by the NSR 10 and an increase in the amount of NOx discharged from the bypass pipe 6, an increase in the amount of NOx through oxidation of NH₃ discharged from the NSR in a NOx reduction treatment by the oxidation catalyst, is considered to determine whether addition-synchronous bypass control is executed or not.

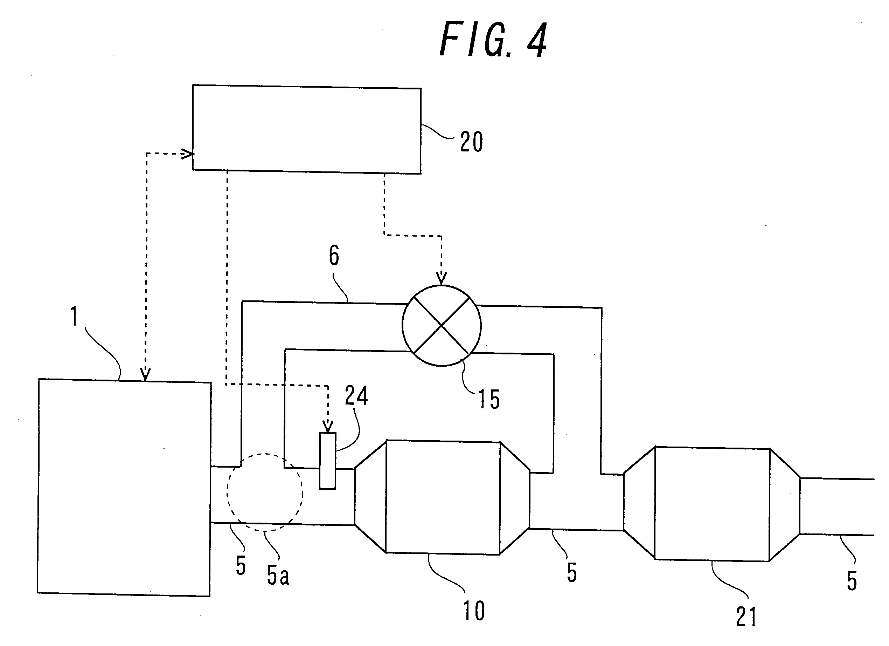

FIG. 4 shows a schematic structure of an internal combustion engine according to the present embodiment, and an exhaust system and a control system thereof. In the present embodiment, a fuel addition valve 24 is provided in an exhaust pipe 5 on the downstream side of a bifurcating portion 5a to a bypass pipe 6 in the exhaust pipe 5. An oxidation catalyst 21 is also provided on the downstream side of a merging portion at which the bypass pipe 6 merges with the exhaust pipe 5, and that is located on the downstream side of an NSR 10 in the exhaust pipe 5. The structure is otherwise the same as that shown in FIG. 1. Therefore, in the following description, the same components as those shown in FIG. 1 will be denoted by the same reference numerals and characters, and description thereof will be omitted. Moreover, in the present embodiment as well, a NOx reduction treatment is performed according to the timing chart of FIG. 2.

A case in which addition-synchronous bypass control is executed in this structure to carry out the NOx reduction treatment of the NSR 10 is considered. In this case, NOx stored in the NSR 10 and NOx discharged from the internal combustion engine 1 are reduced for the most part in the NSR 10 by fuel addition from the fuel addition valve 24, but are partially discharged from the NSR 10 as NH₃.

NH₃ discharged from the NSR 10 may be oxidized back to NOx in the oxidation catalyst 21. In this case, NOx thus generated may be discharged from the oxidation catalyst 21, which may reduce the rate of purification of NOx as a result.

In view of this, in the present embodiment, a decrease in the amount of discharged NOx due to improvement in the rate of purification by the NSR 10 and the sum of an increase in the amount of NOx discharged from the bypass pipe 6 and an increase in the amount of NOx through oxidation of NH₃ discharged from the NSR 10 by the oxidation catalyst 21 are compared with each other for an interval of the NOx reduction treatment. The addition-synchronous bypass control is executed only when it is determined that the decrease in the amount of discharged NOx due to improvement in the rate of purification by the NSR 10 is larger than the sum of the increase in the amount of NOx discharged from the bypass pipe 6 and the increase in the amount of NOx through oxidation of NH₃ discharged from the NSR 10 by the oxidation catalyst 21.

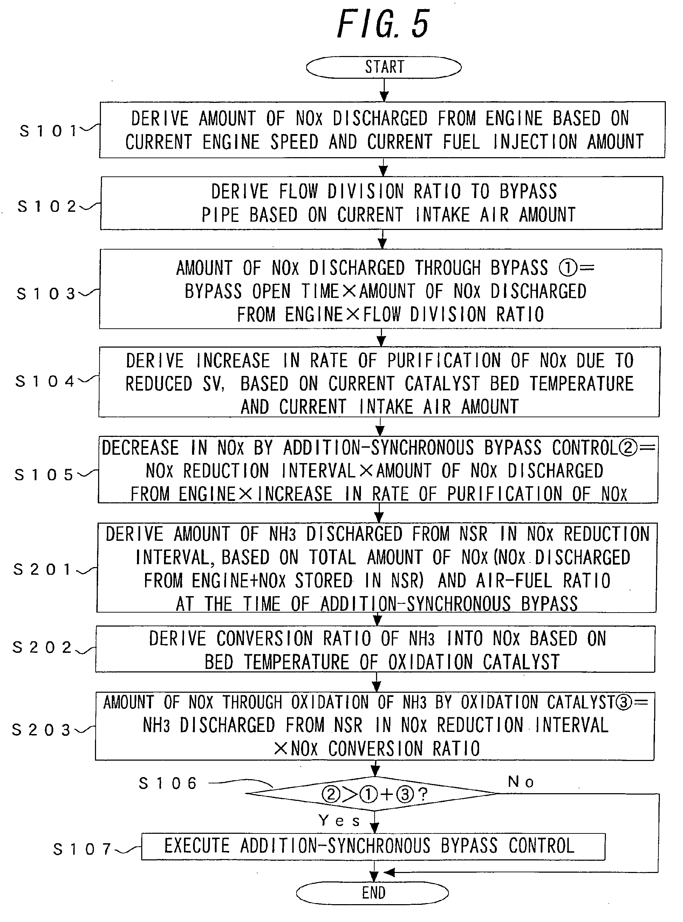

FIG. 5 is a flowchart showing an addition-synchronous bypass control execution determination routine 2 of the present embodiment. This routine is a program stored in the ROM in the ECU 20, and is a routine which is executed every predetermined period by the ECU 20 while the NOx reduction treatment is performed. Since the processes of S 101 to S 105 in this routine are the same as those of the addition-synchronous bypass control execution determination routine shown in FIG. 3, description thereof will be omitted.

In S201 of this routine, the amount of NH₃ discharged from the NSR 10 in a NOx reduction (regeneration treatment) interval shown in FIG. 2 is derived from the sum of the amount of NOx discharged from the internal combustion engine 1 in the NOx reduction interval and the amount of NOx stored in the NSR 10, and an estimated value of an air-fuel ratio in the addition-synchronous bypass control.

More specifically, the total amount of NOx is derived from a product of the amount of NOx (g/s) discharged from the internal combustion engine 1 per unit time which is derived in S 101 and the time of the NOx reduction interval, and the amount of NOx stored in the NSR 10 which is estimated from the history of the operational state of the internal combustion engine 1. The amount of NH₃ discharged from the NSR 10 in the NOx reduction interval is derived by reading the amount of NH₃ corresponding to the current total amount of NOx and the estimated air-fuel ratio, from a map storing the relation among the total amount of NOx, the air-fuel ratio estimated based on the amount of fuel added from the fuel addition valve 24 to the exhaust gas and the intake air amount, and the amount of NH₃ discharged from the NSR 10 in the NOx reduction interval. Note that, at this time, a part of the amount of NOx discharged from the internal combustion engine 1 in the NOx reduction (regeneration treatment) interval passes through the bypass pipe 6 and is not introduced into the NSR 10. This value is ignored as an error in the present embodiment. The routine proceeds to S202 after the process of S201 is completed.

In S202, the conversion ratio of NH₃ discharged from the NSR 10 into NOx in the oxidation catalyst 21 is derived from the bed temperature of the oxidation catalyst 21. More specifically, the conversion ratio is derived by reading the value of the conversion ratio corresponding to a current bed temperature of the oxidation catalyst 21 from a map storing the relation between the bed temperature of the oxidation catalyst 21 and the conversion ratio. Note that the bed temperature of the oxidation catalyst 21 may be obtained by detecting the temperature of the exhaust gas discharged from the oxidation catalyst by an exhaust temperature sensor (not-shown). The bed temperature of the oxidation catalyst 21 may alternatively be estimated from the operational state of the internal combustion engine 1. The routine proceeds to S203 after the process of S202 is completed.

In S203, the amount of NOx generated through oxidation of NH₃ discharged from the NSR 10 by the oxidation catalyst 21 is calculated. More specifically, the amount of NOx generated through oxidation of NH₃ discharged from the NSR 10 in the NOx reduction interval by the oxidation catalyst 21 is calculated by multiplying the amount of NH₃ discharged from the NSR 10 in the NOx reduction interval, which has been derived in S201, by the conversion ratio into the NOx derived in S202. The routine proceeds to S204 after the process of S203 is completed.

In S204, the sum of the amount of NOx discharged through the bypass pipe 6 while the switch valve 15 is open, which has been calculated in S103, and the amount of NOx generated through oxidation of NH₃ discharged from the NSR 10 in the NOx reduction interval by the oxidation catalyst 21, which has been calculated in S203, is compared with the decrease in the amount of NOx discharged from the NSR 10 by the addition-synchronous bypass control, which has been calculated in S105. The routine proceeds to S 107 if it is determined that the decrease in the amount of NOx discharged from the NSR 10 by the addition-synchronous bypass control is larger than the sum of the amount of NOx discharged through the bypass pipe 6 while the switch valve 15 is open and the amount of NOx generated through oxidation of NH₃ discharged from the NSR 10 in the NOx reduction interval by the oxidation catalyst 21. On the other hand, the routine is terminated once if it is determined that the total amount of NOx is equal to or larger than the decrease in the amount of NOx discharged from the NSR 10 by the addition-synchronous bypass control.

As described above, in this routine, the sum of the amount of NOx discharged through the bypass pipe 6 while the switch valve 15 is open and the amount of NOx generated through oxidation of NH₃ discharged from the NSR 10 in the NOx reduction interval by the oxidation catalyst 21 which has been calculated in S203 is compared with the decrease in the amount of NOx discharged from the NSR 10 by the addition-synchronous bypass control. The addition-synchronous bypass control is executed only when the decrease in the amount of NOx discharged from the NSR 10 by the addition-synchronous bypass control is larger than the total amount of NOx. Accordingly, the addition-synchronous bypass control can be executed only when it is determined that the total emission is improved by executing the addition-synchronous bypass control. Therefore, the effect of improving emission can be more reliably obtained.

Note that, in the present embodiment, the ECU 20 for performing the processes of S 101 through S204 functions as NOx amount determining means in the present embodiment.

Moreover, in the addition-synchronous bypass control execution determination routine 2 described above, the sum of the amount of NOx discharged through the bypass pipe 6 while the switch valve 15 is open and the amount of NOx generated through oxidation of NH₃ discharged from the NSR 10 in the NOx reduction interval by the oxidation catalyst 21 is compared with the decrease in the amount of discharged NOx due to improvement in the rate of purification by the NSR 10 for the NOx reduction interval. However, the period for comparison is not limited to the NOx reduction interval. For example, regarding a plurality of NOx reduction intervals, a mean value of the sums of the amount of NOx discharged through the bypass pipe 6 while the switch valve 15 is open and the amount of NOx generated through oxidation of NH₃ discharged from the NSR 10 in the NOx reduction interval by the oxidation catalyst 21 may be compared with a mean value of the decreases in the amount of discharged NOx due to improvement in the rate of purification by the NSR 10.

In S201 to S203 of the addition-synchronous bypass control execution determination routine 2 described above, the method for calculating the amount of NOx generated through oxidation of NH₃ discharged from the NSR 10 in the NOx reduction interval by the oxidation catalyst 21 is not specifically limited to the method described in the present embodiment. The above calculation method may be modified as appropriate if there is any method capable of calculating the value more accurately.

In S204 of the addition-synchronous bypass control execution determination routine 2, the sum of the amount of discharged NOx calculated in S 103 and the amount of generated NOx calculated in S203 is compared with the decrease in the amount of discharged NOx calculated in S105. The addition-synchronous bypass control is executed only when it is determined that the decrease in the amount of discharged NOx calculated in S105 is larger than the sum of the amount of discharged NOx calculated in S 103 and the amount of generated NOx calculated in S203.

However, the method for determining whether the addition-synchronous bypass control is executed or not based on the amount of NOx discharged through the bypass pipe 6 while the switch valve 15 is open, the decrease in the amount of NOx discharged from the NSR 10 by the addition-synchronous bypass control, and the amount of NOx generated through oxidation of NH₃ discharged from the NSR 10 by the oxidation catalyst 21 is not limited to this. For example, in the case where there is a difference in calculation accuracy among the amount of discharged NOx calculated in S103, the decrease in the amount of discharged NOx calculated in S 105, and the amount of generated NOx calculated in S203, the above method for determining whether the addition-synchronous bypass control is executed or not may be modified as appropriate by, for example, multiplying any of the above three values by a weighting coefficient.

In other words, the addition-synchronous bypass control may be executed when it is determined that the total emission is substantially improved in view of the following three factors: the amount of NOx discharged through the bypass pipe 6 while the switch valve 15 is open; the amount of NOx generated through oxidation of NH₃ discharged from the NSR 10 by the oxidation catalyst 21; and the decrease in the amount of NOx discharged from the NSR 10 by the addition-synchronous bypass control.

### INDUSTRIAL APPLICABILITY

According to the present invention, in a treatment of regenerating the purification performance of an exhaust purification device, a reducer is supplied to the exhaust purification device and a part of the exhaust gas is caused to bypass the exhaust purification device, whereby exhaust emission can be more reliably improved.

## Claims

1. An exhaust purification system for an internal combustion engine, **characterized by** comprising:
an exhaust purification device provided in an exhaust passage of said internal combustion engine, for purifying exhaust gas passing through said exhaust passage;
a bypass passage branching from said exhaust passage on an upstream side of said exhaust purification device and merging into said exhaust passage on a downstream side of said exhaust purification device, for causing said exhaust gas passing through said exhaust passage to bypass said exhaust purification device;
reducer supply means for supplying a reducer to said exhaust gas passing through said exhaust passage on the upstream side of said exhaust purification device; and
regeneration means for performing a regeneration treatment for regenerating purification performance of said exhaust purification device, when an amount of a purification substance accumulated in said exhaust purification device becomes equal to or larger than a predetermined value, said regeneration treatment being a treatment for regenerating the purification performance of said exhaust purification device by supplying said reducer from said reducer supply means to said exhaust gas to introduce said reducer into said exhaust purification device; and
regeneration exhaust flow rate control means for executing regeneration exhaust flow rate control when said regeneration means performs said regeneration treatment, said regeneration exhaust flow rate control being a control operation in which, of said exhaust gas passing through said exhaust passage, an amount of exhaust gas passing through said bypass passage is increased and an amount of exhaust gas passing through said exhaust purification device is reduced, wherein
whether said regeneration exhaust flow rate control is executed or not is determined based on the following two values which are obtained when said regeneration exhaust flow rate control is executed during execution of said regeneration treatment: a decrease in an amount of said purification substance discharged from said exhaust purification device due to an increase in a rate of purification by said exhaust purification device; and an increase in an amount of said purification substance discharged from said bypass passage due to an increase in said exhaust gas passing through said bypass passage.

2. The exhaust purification system for an internal combustion engine according to claim 1, **characterized by** further comprising
purification substance amount determination means for determining the magnitude relation between the following two values which are obtained when said regeneration exhaust flow rate control is executed during execution of said regeneration treatment: the decrease in the amount of said purification substance discharged from said exhaust purification device due to the increase in the rate of purification by said exhaust purification device; and the increase in the amount of said purification substance discharged from said bypass passage due to the increase in said exhaust gas passing through said bypass passage, wherein
said regeneration exhaust flow rate control is executed when said purification substance amount determination means determines that the decrease in the amount of said purification substance discharged from said exhaust purification device due to the increase in the rate of purification by said exhaust purification device is larger than the increase in the amount of said purification substance discharged from said bypass passage due to the increase in said exhaust gas passing through said bypass passage.

3. The exhaust purification system for an internal combustion engine according to claim 2, **characterized in that** said purification substance amount determining means determines the magnitude relation between the following two values which are obtained in a period from start of supplying said reducer in said regeneration treatment to start of supplying said reducer in a next regeneration treatment: the decrease in the amount of said purification substance discharged from said exhaust purification device due to the increase in the rate of purification by said exhaust purification device; and the increase in the amount of said purification substance discharged from said bypass passage due to the increase in said exhaust gas passing through said bypass passage.

4. The exhaust purification system for an internal combustion engine according to claim 1, **characterized in that**
said exhaust purification device is a storage-reduction type NOx catalyst,
said exhaust purification system further comprises an oxidation catalyst that has an oxidation ability and is provided in said exhaust passage on a downstream side of a merging portion of said exhaust passage and said bypass passage, and
whether said regeneration exhaust flow rate control is executed or not is determined based on the following three values which are obtained when said regeneration exhaust flow rate control is executed during execution of said regeneration treatment: a decrease in an amount of NOx discharged from said exhaust purification device due to an increase in the rate of purification by said exhaust purification device; an increase in an amount of NOx discharged from said bypass passage due to an increase in said exhaust gas passing through said bypass passage; and an increase in an amount of NOx through oxidation of NH₃ discharged from said exhaust purification device by said oxidation catalyst.

5. The exhaust purification system for an internal combustion engine according to claim 4, **characterized by** further comprising
said exhaust purification system further comprises NOx amount determining means for determining the magnitude relation between the following two values which are obtained when said regeneration exhaust flow rate control is executed during execution of said regeneration treatment: the decrease in the amount of NOx discharged from said exhaust purification device due to the increase in the rate of purification by said exhaust purification device; and a sum of the increase in the amount of NOx discharged from said bypass passage due to the increase in said exhaust gas passing through said bypass passage and the increase in the amount of NOx through oxidation of NH₃ discharged from said exhaust purification device by said oxidation catalyst, wherein
said regeneration exhaust flow rate control is executed when said NOx amount determining means determines that the decrease in the amount of NOx discharged from said exhaust purification device due to the increase in the rate of purification by said exhaust purification device is larger than the sum of the increase in the amount of NOx discharged from said bypass passage due to the increase in said exhaust gas passing through said bypass passage and the increase in the amount of NOx through oxidation of NH₃ discharged from said exhaust purification device by said oxidation catalyst.

6. The exhaust purification system for an internal combustion engine according to claim 5, **characterized in that** said NOx amount determination means determines the magnitude relation between the following two values which are obtained in a period from start of supplying said reducer in said regeneration treatment to start of supplying said reducer in a next regeneration treatment: the decrease in the amount of NOx discharged from said exhaust purification device due to the increase in the rate of purification by said exhaust purification device; and the sum of the increase in the amount of NOx discharged from said bypass passage due to the increase in said exhaust gas passing through said bypass passage and the increase in the amount of NOx through oxidation of NH₃ discharged from said exhaust purification device by said oxidation catalyst.
